# EUROPÄISCHE PATENTANMELDUNG

(11) **EP 0 739 832 A2**
(43) Veröffentlichungstag der Anmeldung: **30.10.1996**
(21) Anmeldenummer: 96890062.1
(22) Anmeldetag: 29.03.1996
(51) Int. Cl.: B65G 39/10

(54) **Rollenbahn**

(30) Priorität: 26.04.1995 AT 231/95
(71) Anmelder: P.E.E.M. Förderanlagen Ges.m.b.H., 8051 Graz (AT)
(72) Erfinder: Neukam, Helmut, Ing., 8071 Hausmannstätten (AT)
(74) Vertreter: Kliment, Peter, Dipl.-Ing.

(57) **Zusammenfassung**

Rollenbahn mit zwei parallel zueinander verlaufenden Längsholmen (1), in denen eine Vielzahl von Rollen (2) drehbar gelagert und die über Verbindungsteile miteinander verbunden sind. Um eine einfache Verbindung der Längsholme zu ermöglichen, ist vorgesehen, daß die Längsholme (1 durch im wesentlichen C-förmige Profile gebildet sind, deren Stege (5) außen liegen und in deren oberen Schenkeln (4) zu den parallel zu den Stegen (5) verlaufenden vertikal nach unten gerichteten Abwinkelungen (6) hin offene und sich im Bereich dieser über einen Teil der Höhe der Abwinkelung (6) erstreckende Ausnehmungen (8) angeordnet sind, deren lichte Breite im Bereich der Abwinkelungen (6) kleiner als deren parallel zum Steg (5) verlaufende größte lichte Breite ist, wobei in diese in senkrecht zu den Längsholmen (1) verlaufenden Querebenen angeordneten Ausnehmungen (8) stirnseitig angeordnet Ansätze (9) der Verbindungsteile (3) eingreifen, deren Querschnitte den Ausnehmungen (8) im Bereich der Schenkel (4) entsprechen, in welche mit je einem vorzugsweise quer zu den Längsholmen (1) verlaufenden Schlitz (14) versehene Ansätze (9) in zentrale Bohrungen (10) derselben Klemmschrauben (15) einsetzbar sind, die diese Schlitze (14) aufweiten.

## Beschreibung

Die Erfindung bezieht sich auf eine Rollenbahn gemäß dem Oberbegriff des Anspruches 1.

Bei bekannten derartigen Rollenbahnen sind zur Verbindung der Längsholme meist Metallstäbe vorgesehen, die die Stege der Längsholme durchsetzen. Dabei sind die enden der Stäbe mit Gewinden versehen und die Einstellung des erforderlichen Abstandes zwischen den Längsholmen erfolgt mittels Paaren von Muttern, zwischen denen die Stege der Längsholme geklemmt werden.

Der Nachteil einer solchen Lösung besteht darin, daß die Enden der Stäbe über die Außenseiten der Stege der Längsholme vorragen und zur Vermeidung von Verletzungsgefahren abgedeckt werden müssen. Außerdem ist die Montage der Stäbe relativ aufwendig.

Ziel der Erfindung ist es, diese Nachteile zu vermeiden und einen Rollenbahn der eingangs erwähnten Art vorzuschlagen, die sich einfach montieren läßt und bei der seitlich vorstehende Teile vermieden sind.

Erfindungsgemäß wird dies bei einer Rollenbahn der eingangs erwähnten Art durch die kennzeichnenden Merkmale des Anspruches 1 erreicht.

Durch die vorgeschlagenen Maßnahmen können die Verbindungsteile einfach von oben her in die oberen Schenkel der Längsholme eingesteckt werden, wobei die Vorsprünge der Verbindungsteile in die Ausnehmungen im Bereich der oberen Schenkel eingesteckt werden.

Durch die vorgesehenen Gestalt der Ausnehmungen in den Schenkeln der Längsholme ist sichergestellt, daß die Verbindungsteile in deren Längsrichtung wirkende Zug- und Druckkräfte aufnehmen, bzw. übertragen können. Dabei ergibt sich durch die Klemmschrauben eine spielfreie Verbindung zwischen den Längsholmen und den Verbindungsteilen.

In vielen Fällen werden solche Rollenbahnen von Sensoren überwacht, um die auf diesen transportierten Stücke an vorgesehenen Stellen von der Rollenbahn entfernen, bzw. seitlich ausschieben zu können. Solche Sensoren arbeiten häufig berührungslos, wobei jedoch viele solcher Sensoren durch metallische Verbindungen zwischen den Längsholmen in Funktion gestört werden können.

Um solche Störungen zu vermeiden, ist es vorteilhaft die Rollenbahn nach den Merkmalen des Anspruches 2 auszugestalten.

Durch die vorgeschlagenen Maßnahmen ist sichergestellt, daß sich zwischen den Längsholmen keine metallischen Teile befinden, durch welche die Funktion allfällig angeordneter Sensoren gestört werden könnte.

Durch die Merkmale des Anspruches 3 ergibt sich eine sehr einfache und sichere Festlegung der Lage der Verbindungsteile in Bezug auf die Längsholme. Außerdem kann der Rand der Ausnehmung im unteren Bereich der Abwinkelungen leicht zwischen den Wänden der Einkerbung geklemmt werden. Außerdem kann der ordnungsgemäße Sitz der Verbindungselemente durch Kontrolle des im wesentlichen ebenen Überganges von den Ansätzen der Verbindungsteil zu den Oberseiten der oberen Schenkel der Längsholme leicht überwacht werden.

Die Erfindung wird nun anhand der Zeichnung näher erläutert. Dabei zeigen:
Fig. 1 schematisch in einer axonomtrischen Darstellung eine Rollenbahn,
Fig. 2 einen Ausschnitt aus einem Längsholm einer Rollenbahn nach der Fig. 1,
Fig. 3 eine Draufsicht auf einen Verbindungsteil,
Fig. 4 eine Stirnansicht des Verbindungsteiles nach Fig. 3,
Fig. 5 eine Seitenansicht des Verbindungsteiles nach der Fig. 3,
Fig. 6 eine Draufsicht auf den Verbindungsbereich eines Längsholmes mit einem Verbindungsteiles und
Fig. 7 eine Ansicht des Verbindungsbereiches nach der Fig. 6.

Eine Rollenbahn weist im wesentlichen zwei parallel zueinander verlaufende Längsholme 1 auf, zwischen denen Rollen 2 drehbar gehalten sind. Dabei sind die Längsholme 1 über Verbindungsteile 3 miteinander verbunden.

Die Längsholme 1 sind durch im Querschnitt im wesentlichen C-förmige Profile gebildet, an dessen obereren Schenkel 4 eine parallel zum Steg 5 verlaufende Abwinkelung 6 anschließt. Der untere Schenkel 7 weist dagegen keine Abwinkelung auf.

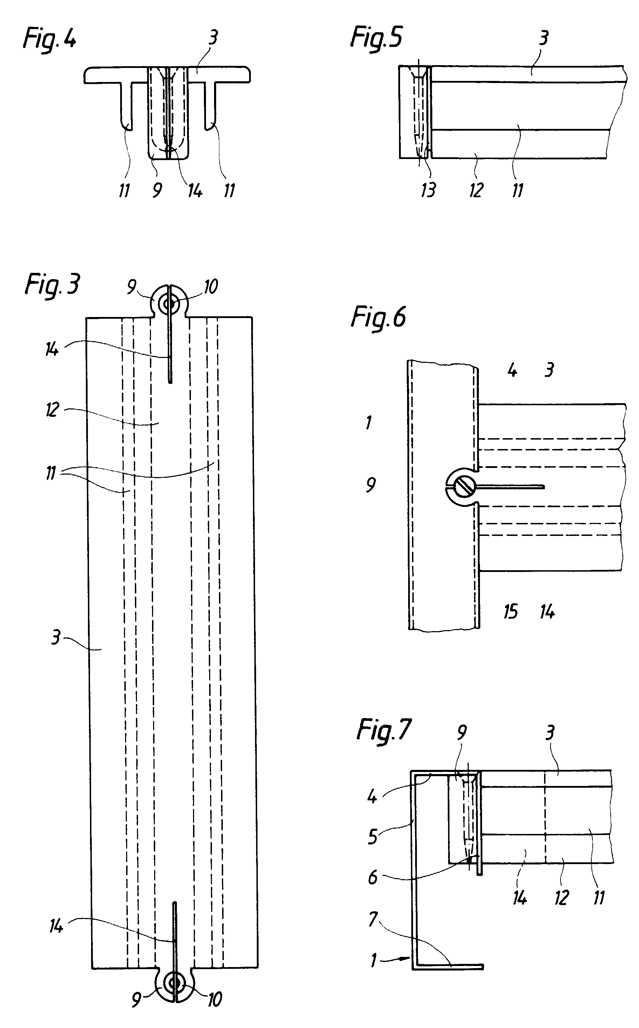

Zur Verbindung der Längsholme 1 sind deren obere Schenkel 4 in regelmäßigen Abständen mit zur Abwinkelung 6 hin offene Ausnehmungen 8 versehen. Diese Ausnehmung 8 erstreckt sich, vom Schenkel 4 ausgehend, über eine Teil der Höhe der Abwinkelung 6. Dabei ist, wie aus der Fig. 6 zu ersehen ist, die lichte Breite der Ausnehmung 8 im Bereich der Abwinekelung 6 kleiner als die größte lichte Breite der Ausnehmung 8 parallel zum Steg 5 gemessen, wobei beim dargestellten Ausführungsbeispiel die größte lichte Breite der Ausnehmung 8 durch deren Durchmesser gegeben ist.

Grundsätzlich könnte die Ausnehmung statt einer kreisbogenförmig verlaufenden Begrenzung auch eine im wesentlichen dreieckig, bzw. trapezförmig verlaufende Begrenzung aufweisen. Wesentlich dabei ist lediglich, daß die Ausnehmung in einem Bereich eine größere lichte Breite aufweist, als im Bereich der Abwinkelung 6 und damit ihrer Öffnung.

Die Verbindungsteile 3 sind aus Kunststoff hergestellt und weisen an ihren beiden Stirnseiten Ansätze 9 auf, die in einem parallel zur Oberseite des Verbindungsteiles 3 geführten Schnitt einen der Ausnehmung 8 im Bereich des oberen Schenkels 4 der Längsholme 1 entsprechenden Querschnitt aufweisen. Weiters weisen die Ansätze 9 eine Bohrung 10 zur Aufnahme einer Klemmschraube auf.

Die Verbindungsteile 3 weisen an ihrer Unterseite drei Rippen 11, 12 auf, von denen die äußeren rippen 11 eine geringere Höhe und dicke aufweisen, wie die mittlere Rippe 12 (Fig. 5). Dabei weist die mittlere Rippe 12 im wesentlichen eine dem äußeren Durchmesser der Ansätze 9 entsprechende Dicke auf.

Die Ansätze 9 sind von der mittleren Rippe 12 durch eine Nut 13 abgesetzt, die im Bereich des unteren Endes der Ansätze 9, wie in der Fig. 4 strichliert angedeutet ist, kreisbogenförmig verläuft und damit dem Verlauf des Randes der Ausnehmung 8 im Bereich der Abwinkelung 6 entspricht.

Wie aus der Fig. 3 und 4 zu ersehen ist, sind die Verbindungsteile 3 an ihren beiden Enden mit schlitzen 14 versehen, die sich über die gesamte Höhe der Ansätze 9 und die mittleren Rippen 12 erstrecken. Diese Schlitze 14 verlaufen in Längsrichtung der Verbindungsteile und durchsetzen die Ansätze 9. Durch Einsetzen von Klemmschrauben 15 (Fig. 6) in die Bohrungen 10 der Ansätze 9 können die Schlitze 14 aufgeweitet werden und dadurch bei in die Ausnehmungen 8 eingesetzten Ansätzen 9 eine sichere Verankerung der Verbindungsteile in den Längsholmen 1 erreicht werden.

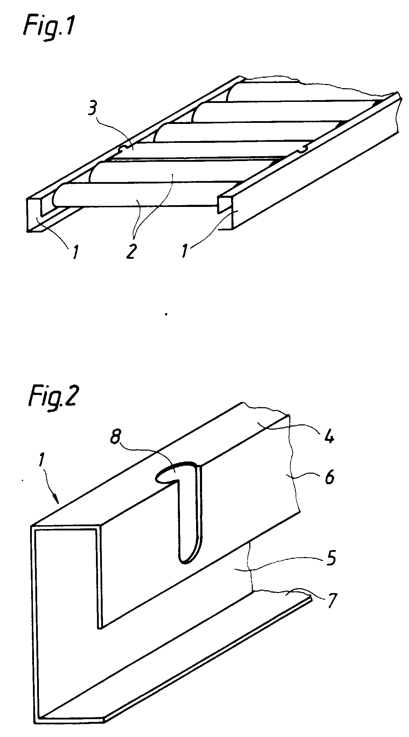

Die Ausnehmungen 8 in den beiden Längsholmen 1 sind jeweils in eine senkrecht zu den Längsholmen 1 stehenden Querebene angeordnet, wie aus der Fig. 1 zu ersehen ist. Durch Einsetzen der Ansätze 9 von Verbindungsteilen 3 und nachfolgendes Einsetzen von Klemmschrauben 15 in die Bohrungen der Ansätze 9 können die Längsholme 1 sicher miteinander verbunden werden, wobei sich zwischen den Längsholmen keine Metallteile befinden und eine Störung von Sensoren zur Erfassung von auf der Rollenbahn befindlichen Stücken vermieden wird.

Die Bohrungen 10 weisen an der Oberseite der Ansätze 9 Ansenkungen zur Aufnahme der Köpfe von Klemmschrauben 15 auf.

Wie aus den Fig. 7 zu ersehen ist, ragen die Verbindungsteile 3 nicht über die Oberseite der Längsholme 1 vor, die unter der durch die obersten Mantellinien der Rollen 2 bestimmten Ebene liegen.

## Patentansprüche

1. Rollenbahn mit zwei parallel zueinander verlaufenden Längsholmen (1), in denen eine Vielzahl von Rollen (2) drehbar gelagert und die über Verbindungsteile miteinander verbunden sind, **dadurch gekennzeichnet**, daß die Längsholme (1 durch im wesentlichen C-förmige Profile gebildet sind, deren Stege (5) außen liegen und in deren oberen Schenkeln (4) zu den parallel zu den Stegen (5) verlaufenden vertikal nach unten gerichteten Abwinkelungen (6) hin offene und sich im Bereich dieser über einen Teil der Höhe der Abwinkelung (6) erstreckende Ausnehmungen (8) angeordnet sind, deren lichte Breite im Bereich der Abwinkelungen (6) kleiner als deren parallel zum Steg (5) verlaufende größte lichte Breite ist, wobei in diese in senkrecht zu den Längsholmen (1) verlaufenden Querebenen angeordneten Ausnehmungen (8) stirnseitig angeordnet Ansätze (9) der Verbindungsteile (3) eingreifen, deren Querschnitte den Ausnehmungen (8) im Bereich der Schenkel (4) entsprechen, in welche mit je einem vorzugsweise quer zu den Längsholmen (1) verlaufenden Schlitz (14) versehene Ansätze (9) in zentrale Bohrungen (10) derselben Klemmschrauben (15) einsetzbar sind, die diese Schlitze (14) aufweiten.

2. Rollenbahn nach Anspruch 1, **dadurch gekennzeichnet**, daß die Verbindungsteile (3) aus Kunststoff hergestellt sind und die Klemmschrauben (15) bis unter die Oberseite der Verbindungsteile (3) in die Ansätze (9) versenkbar sind.

3. Rollenbahn nach Anspruch 1 oder 2, **dadurch gekennzeichnet**, daß die Ansätze (9) an ihrem unteren Ende eine Einkerbung (13) aufweisen, in die der untere Rand der Ausnehmung (8) im Bereich der vertikal nach unten gerichteten Abwinkelung (6) eingreift und die Ansätze (9) eben mit der Oberseite der oberen Schenkel (4) der Längsholme (1) und der Oberseite des Verbindungsteiles (3) abschließen, die stirnseitig an den Abwinkelungen (6) der Längsholme (1) anliegen.
